# EUROPÄISCHE PATENTANMELDUNG

(11) **EP 4 764 422 A1**
(43) Veröffentlichungstag der Anmeldung: **24.06.2026**
(21) Anmeldenummer: 24221798.2
(22) Anmeldetag: 19.12.2024
(51) Int. Cl.: G01D 18/00, G01D 5/244

(54) **VERFAHREN ZUM BESTIMMEN VON WINKELKORREKTURWERTEN FÜR EINE ANORDNUNG MIT EINEM MOTOR UND EINEM MIT DIESEM VERBAUTEN WINKELMESSSYSTEM, VORRICHTUNG UND SYSTEM**

(71) Anmelder: SICK AG, 79183 Waldkirch (DE)
(72) Erfinder: Hogg, Stefan, 78667 Villingendorf (DE); Hopp, David, 78166 Donaueschingen (DE)
(74) Vertreter: Manitz Finsterwald Patent- und Rechtsanwaltspartnerschaft mbB

(57) **Zusammenfassung**

In einer Ausführungsform weist ein Verfahren zum Bestimmen von Winkelkorrekturwerten für eine Anordnung mit einem Motor und einem mit diesem verbauten Winkelmesssystem die folgenden Schritte auf:
Antreiben einer Antriebswelle des Motors mit einer konstanten Drehzahl,
Erfassen einer ersten Menge von Winkelpositionen eines Rotors bezogen auf einen Stator des Motors mit dem Winkelmesssystem,
Bestimmen eines Referenzwinkels in Abhängigkeit der konstanten Drehzahl und der ersten Menge von Winkelpositionen,
Erfassen einer zweiten Menge von Winkelpositionen des Rotors bezogen auf den Stator des Motors mit dem Winkelmesssystem,
Ermitteln mehrerer Winkelkorrekturwerte in Abhängigkeit des Referenzwinkels und der zweiten Menge von Winkelpositionen.

## Beschreibung

Die vorliegende Erfindung betrifft ein Verfahren zum Bestimmen von Winkelkorrekturwerten für eine Anordnung mit einem Motor und einem mit diesem verbauten Winkelmesssystem, eine Vorrichtung zum Bestimmen von Winkelkorrekturwerten für eine mit der Vorrichtung koppelbare Anordnung mit einem Motor und einem mit diesem verbauten Winkelmesssystem sowie ein System.

Winkelmesssysteme werden üblicherweise bei der Regelung von Motoren, beispielsweise Synchronmotoren, eingesetzt, um die genaue Position des Rotors bezogen auf den Stator zu bestimmen. Das Winkelmesssystem, welches beispielsweise in einem Motorfeedbacksystem eingesetzt wird, beeinflusst durch die ihm innewohnende Systemgenauigkeit, also seine Winkelmessabweichung, eine Qualität der Motorregelung. Demzufolge kann mit einer höheren Genauigkeit, also einer kleineren Winkelmessabweichung des Winkelmesssystems, die Position oder die Geschwindigkeit des Motors besser geregelt werden.

Gewöhnlich wird die Systemgenauigkeit eines Winkelmesssystems herstellerseitig unter Zuhilfenahme hochgenauer Referenzmesssysteme kalibriert und je nach Produkt zusätzlich justiert, um das System mit einer möglichst hohen Systemgenauigkeit auszuliefern. Dabei wird die systematische Messabweichung des Winkelmesssystems im Rahmen einer Kalibrierung erfasst. Anschließend wird aus den festgestellten Messabweichungen für eine künftige Justage eine Korrekturtabelle oder eine Korrekturvorschrift berechnet, welche in dem Winkelmesssystem hinterlegt wird, bzw. mit diesem ausgeliefert wird. Unter Umständen wird allerdings durch die nachfolgende Montage des Winkelmesssystems im Motor, welche einbauspezifische mechanische Toleranzen mit sich bringt, die zuvor bestimmte Messabweichung verändert oder sogar verschlechtert. Eine diesem Umstand begegnende Verbesserung der Genauigkeit im eingebauten Zustand des Winkelmesssystems ist jedoch nur mittels immensen Aufwands und unter erneuter Zuhilfenahme hochgenauer Referenzmesssysteme möglich. Dies ist aus wirtschaftlicher Sicht oft nicht rentabel. Zudem können hierbei mechanische Probleme auftreten, da auch die Anbaubedingungen des erforderlichen Referenzmesssystems eine entsprechende, nicht zu vernachlässigende Messunsicherheit verursachen.

Vor allem bei einem Einsatz eines Winkelmesssystems in Form eines sogenannten Kit-Systems sind Kalibrierung und Justage jedoch nicht über ein Referenzsystem möglich. Rotor und Stator werden bei diesen Kit-Systemen als separate Baugruppen geliefert und erst bei einem Kunden an den Motor angebaut. Dabei wird die relative Ausrichtung zwischen Maßverkörperung und Detektor erst beim Anbau festgelegt, weshalb das Winkelmesssystem nicht vorab bereits bei der Fertigung kalibriert werden kann.

Daher besteht eine Aufgabe darin, die Systemgenauigkeit eines Winkelmesssystems im eingebauten Zustand zu verbessern.

Diese Aufgabe wird durch das Verfahren zum Bestimmen von Winkelkorrekturwerten für eine Anordnung mit einem Motor und einem mit diesem verbauten Winkelmesssystem gemäß Anspruch 1 gelöst. Vorteilhafte Weiterbildungen und Ausgestaltungen der Erfindung sind der Beschreibung, der Zeichnung sowie den abhängigen Patentansprüchen zu entnehmen.

Erfindungsgemäß weist ein Verfahren zum Bestimmen von Winkelkorrekturwerten für eine Anordnung mit einem Motor und einem mit diesem verbauten Winkelmesssystem folgende Schritte auf:
- Antreiben einer Antriebswelle des Motors mit einer konstanten Drehzahl,
- Erfassen einer ersten Menge von Winkelpositionen eines Rotors bezogen auf einen Stator des Motors mit dem Winkelmesssystem,
- Bestimmen eines Referenzwinkels in Abhängigkeit der konstanten Drehzahl und der ersten Menge von Winkelpositionen,
- Erfassen einer zweiten Menge von Winkelpositionen des Rotors bezogen auf den Stator des Motors mit dem Winkelmesssystem, und
- Ermitteln mehrerer Winkelkorrekturwerte in Abhängigkeit des Referenzwinkels und der zweiten Menge von Winkelpositionen.

Bei dem erfindungsgemäßen Verfahren wird die Antriebswelle des Motors mit eingebautem Winkelmesssystem mit der konstanten Drehzahl, also mit möglichst geringen Drehzahlschwankungen, angetrieben. Das Winkelmesssystem misst die erste Menge von Winkelpositionen und ermittelt daraus den Referenzwinkel. Der Referenzwinkel entspricht somit einem für die konstante Drehzahl, mit der die Antriebswelle angetrieben wird, erwarteten Winkel, also einem Soll-Winkel. Anschließend erfasst das Winkelmesssystem die zweite Menge von Winkelpositionen und ermittelt mehrere Winkelkorrekturwerte als Funktion des Referenzwinkels und jeweiliger Positionen der zweiten Menge von Winkelpositionen.

Das vorgeschlagene Verfahren ermöglicht die Ermittlung von Winkelmessabweichungen sowie die darauf basierende Bestimmung von Winkelkorrekturwerten in dem Winkelmesssystem selbst, also im eingebauten Zustand, das heißt, wenn das Winkelmesssystem bereits mit dem Motor verbaut ist. Dafür ist keine zusätzliche Hardware erforderlich. Somit werden die Winkelkorrekturwerte auf besonders effiziente Art und Weise bestimmt. Eine anschließende Korrektur ist folglich hochpräzise und auf die aktuellen Gegebenheiten des eingebauten Winkelmesssystems abgestimmt.

Bei dem Winkelmesssystem handelt es sich um ein Winkelmesssystem der eingangs beschriebenen Art, welches beispielsweise als Kit-System realisiert ist. Wie bereits erwähnt, wird bei diesen Systemen die relative Ausrichtung zwischen Maßverkörperung und Detektor des Messsystems möglicherweise erst beim Anbau an den Motor festgelegt, was eine vorherige Kalibrierung verhindert. Der Motor ist beispielsweise ein Synchronmotor. Das Winkelmesssystem wird insbesondere in einem Motorfeedbacksystem zur Regelung dieses Synchronmotors eingesetzt.

Gemäß einer Weiterbildung umfasst das Erfassen der ersten Menge von Winkelpositionen ein mehrfaches Erfassen der Winkelposition zu äquidistanten Zeitpunkten während mehrerer Umdrehungen oder während einer Umdrehung, insbesondere während nur einer Umdrehung, des Rotors bei der konstanten Drehzahl. Die dabei erfassten Winkelpositionen bilden die erste Menge von Winkelpositionen. Das Bestimmen des Referenzwinkels umfasst folgende Schritte:
- Bestimmen einer mittleren Differenz zwischen jeweils zwei direkt aufeinanderfolgend erfassten Winkelpositionen der ersten Menge,
- Bestimmen einer Anzahl von während einer Umdrehung des Rotors bei der Drehzahl erfassten Winkelpositionen der ersten Menge, und
- Bestimmen des Referenzwinkels aus der mittleren Differenz und der Anzahl.

Das Winkelmesssystem misst in konstanten Zeitabständen, das heißt zu äquidistanten Zeitpunkten, während sich die Antriebswelle des Motors mit der konstanten Drehzahl dreht, mehrfach eine Winkelposition. Ausgehend von der so bestimmten ersten Menge von Winkelpositionen wird jeweils eine Differenz zwischen jeweils zwei direkt aufeinanderfolgend erfassten Winkelpositionen bestimmt oder errechnet und ein Mittelwert der auf diesem Wege bestimmten Differenzen gebildet, um die mittlere Differenz zu bestimmen. Hierfür wird beispielsweise ein arithmetischer Mittelwert gebildet. Die mittlere Differenz repräsentiert folglich das mittlere Winkeldelta, welches der Positionsänderung zwischen Rotor und Stator zwischen zwei Messzeitpunkten entspricht. Anschließend wird bevorzugt die Anzahl der gemessenen Winkelpositionen über (zumindest) eine komplette Umdrehung bestimmt, also die Menge an Messungen, die zu den äquidistanten Zeitpunkten während genau einer Umdrehung der Antriebswelle des Motors bei der konstanten Drehzahl erfolgt ist. Eine Multiplikation der auf diese Art und Weise bestimmten mittleren Differenz, also des mittleren Winkeldeltas, mit der Anzahl von während einer Umdrehung erfassten Winkelpositionen ergibt die Winkelauflösung pro Umdrehung. Der Referenzwinkel ist ebenfalls eine Funktion der bestimmten mittleren Differenz und der Anzahl von während einer Umdrehung des Rotors erfassten Winkelpositionen. Eine Umdrehung bezeichnet dabei eine Drehung von in etwa 360°.

Die Bestimmung bzw. Berechnung des Referenzwinkels ist dabei unabhängig von der Anzahl der pro Umdrehung bestimmten Winkelpositionen. Durch das mehrmalige Erfassen der Winkelpositionen während z.B. einer Umdrehung des Rotors zur Bildung der ersten Menge von Winkelpositionen wird die mittlere Differenz mit hinreichender Genauigkeit erfasst. Dadurch wird eine anschließende präzise Korrektur der Winkelmessabweichung ermöglicht. Beispielsweise wird hierfür die Umdrehung unmittelbar vor der Umdrehung, während welcher die zweite Menge von Winkelpositionen erfasst wird, genutzt. Mit Vorteil ist eine Abweichung der Drehzahl zwischen der Erfassung der ersten Menge und der Erfassung der zweiten Menge auf ein Minimum reduziert.

Gemäß einer Weiterbildung liegt beim Antreiben mit der konstanten Drehzahl die Drehzahl im Bereich zwischen 100 und 1500 Umdrehungen pro Minute.

Damit ist gewährleistet, dass hinreichende Bedingungen beispielsweise bezüglich Sampling, Latenzen und ähnlichem bei der Erfassung der Winkelpositionen insbesondere der ersten Menge vorliegen.

Eine Abweichung von der konstanten Drehzahl kann vorgegeben werden und beeinflusst die erzielte Kalibriergenauigkeit. Die Kalibrierung mit dem vorgeschlagenen Verfahren wird vorzugsweise dann durchgeführt, wenn die Drehzahl als konstant innerhalb der vorgegebenen bzw. erlaubten Drehzahlschwankungen erkannt wurde.

Das Winkelmesssystem basiert beispielsweise auf einem optischen oder einem magnetischen Encoder, wie sie dem Fachmann bekannt sind.

Gemäß einer weiteren Ausführungsform umfasst das Erfassen der zweiten Menge von Winkelpositionen ein Erfassen einer vordefinierten Anzahl von Winkelpositionen während einer Umdrehung des Rotors. Diese erfassten Winkelpositionen bilden die zweite Menge. Das Ermitteln der Winkelkorrekturwerte umfasst:
- Bestimmen eines Winkelkorrekturwerts für mindestens zwei, insbesondere für alle, erfassten Winkelpositionen der zweiten Menge jeweils in Abhängigkeit einer Differenz zwischen der jeweiligen Winkelposition und der gemäß Referenzwinkel erwarteten Winkelposition.

Die Winkelpositionen der zweiten Menge entsprechen demgemäß Ist-Winkelpositionen, welche jeweils eine mehr oder weniger große Winkelmessabweichung aufweisen können. Anschließend wird für mehrere Winkelpositionen der zweiten Menge, insbesondere für jede erfasste Winkelposition der zweiten Menge, jeweils ein Wert zur Korrektur des Winkelmessfehlers, also der Winkelkorrekturwert, bestimmt. Hierfür wird der Referenzwinkel verwendet, der die Basis für die Bestimmung der Abweichung zwischen der jeweiligen erfassten Winkelposition der zweiten Menge und der erwarteten Winkelposition, also der Soll-Winkelposition, bildet. Dabei ist es nicht erforderlich, dass die vordefinierte Anzahl von Winkelpositionen, die die zweite Menge bilden, mit der Anzahl der während einer Umdrehung des Rotors erfassten Winkelpositionen der ersten Menge, welche eine Funktion des jeweiligen zeitlichen Abstands zwischen zwei Messungen ist, übereinstimmt. Sofern die beiden Anzahlen voneinander abweichen, wird zur Bestimmung der erwarteten Winkelposition lokal interpoliert.

Die Bestimmung des Referenzwinkels und die Errechnung bzw. Bestimmung der jeweiligen Winkelkorrekturwerte erfolgt seriell bei der gleichen konstanten Drehzahl. Damit ist eine effiziente Implementierung in einem Controllerbaustein, beispielsweise einem Mikrocontroller, des Winkelmesssystems möglich. Dieser ohnehin vorhandene Systembestandteil wird vorteilhafterweise wiederverwendet. Eine zusätzliche Hardware ist nicht erforderlich.

Gemäß einer Weiterbildung werden die Winkelkorrekturwerte in einer Tabelle abgespeichert. Die Tabelle weist eine Menge von Einträgen entsprechend der vordefinierten Anzahl von erfassten Winkelpositionen der zweiten Menge auf. Alternativ weist die Tabelle eine Menge von Einträgen auf, die kleiner als die vordefinierte Anzahl von erfassten Winkelpositionen der zweiten Menge ist.

Die Winkelkorrekturwerte werden in Form einer Tabelle abgespeichert und können somit direkt in dem Winkelmesssystem hinterlegt werden. Die Menge der Einträge ist dabei frei wählbar und muss nicht übereinstimmen mit der vordefinierten Anzahl von erfassten Winkelpositionen der zweiten Menge. In einer beispielhaften Implementierung weist die Tabelle eine vordefinierte Anzahl von Einträgen auf, so dass hierfür ein Speicher mit dazu passender Größe zur Verfügung gestellt werden kann.

Bei der nachfolgenden Anwendung der Tabelle zur Korrektur von Messwerten wird erforderlichenfalls zwischen Tabellenwerten interpoliert, um entsprechende Messpositionen zu korrigieren.

Gemäß einer Weiterbildung wird die zweite Menge von Winkelpositionen mehrfach erfasst und zugehörige Winkelkorrekturwerte werden ebenso oft bestimmt, also für mehr als eine Umdrehung des Rotors. Sodann erfolgt eine Mittelung der jeweils bestimmten Korrekturwerte. Dadurch werden eventuell während der Bestimmung der Winkelkorrekturwerte vorliegende Drehzahlschwankungen ausgeglichen.

Gemäß einer Weiterbildung werden die Schritte des Verfahrens für mindestens zwei voneinander verschiedene Drehzahlen des Rotors durchgeführt. Alternativ oder zusätzlich werden die Schritte des Verfahrens für dieselbe Drehzahl des Rotors erneut durchgeführt.

Wird das Verfahren für verschiedene Drehzahlen durchgeführt, so ist jede dieser Drehzahlen konstant und liegt bevorzugt im Bereich zwischen 100 und 1500 Umdrehungen pro Minute. Somit kann für unterschiedliche Drehzahlen jeweils eine Tabelle mit Korrekturwerten ermittelt werden. Wird das Verfahren für dieselbe Drehzahl erneut oder wiederholt durchgeführt, können jeweils gemittelte Korrekturwerte bestimmt werden.

Gemäß einer weiteren Ausführungsform weist das Verfahren eine Auswertung der jeweils erhaltenen Winkelkorrekturwerte auf.

Bei mehrmaliger Ermittlung der Winkelkorrekturwerte können im Rahmen der Auswertung die bestimmten Werte in geeigneter Weise miteinander verglichen werden. Ein Ergebnis dieser Auswertung kann vorteilhafterweise für eine vorausschauende Wartung oder als Ergänzung der funktionalen Sicherheit verwendet werden.

Gemäß einer weiteren Ausführungsform werden die Schritte des Verfahrens in einem Normalbetrieb des Motors oder in einem Testbetrieb des Motors durchgeführt.

Das erfindungsgemäße Verfahren ermöglicht auch eine Anwendung während des Normalbetriebs des Motors, sofern die beschriebenen Voraussetzungen erfüllt sind, das heißt, sofern der Motor im Wesentlichen mit der konstanten Drehzahl im Bereich insbesondere zwischen 100 und 1500 Umdrehungen pro Minute betrieben wird.

In einer Weiterentwicklung weist das Verfahren zusätzlich ein Zusammenführen der ermittelten Winkelkorrekturwerte mit für das Winkelmesssystem vorab kalibrierten Kompensationswerten auf.

Demzufolge werden die ermittelten Korrekturwerte mit bereits vorab kalibrierten und justierten Korrekturwerten kombiniert.

Somit kann das Verfahren auch für Winkelmesssysteme verwendet werden, welche bereits bei der Fertigung kalibriert bzw. justiert wurden. Damit wird eine höhere Redundanz bzw. Diversität bei der Korrektur von Winkelmessabweichungen erreicht.

Weiterer Gegenstand der vorliegenden Erfindung ist eine Vorrichtung zum Bestimmen von Winkelkorrekturwerten für eine mit der Vorrichtung koppelbare Anordnung mit einem Motor und einem mit diesem verbauten Winkelmesssystem, wobei eine Antriebswelle des Motors mit einer konstanten Drehzahl angetrieben wird. Die Vorrichtung ist dazu eingerichtet, mit dem Winkelmesssystem der Anordnung eine erste Menge von Winkelpositionen eines Rotors bezogen auf einen Stator des Motors zu erfassen, sowie einen Referenzwinkel in Abhängigkeit der ersten Menge erfasster Winkelpositionen und der konstanten Drehzahl zu bestimmen. Ferner ist die Vorrichtung dazu eingerichtet, mit dem Winkelmesssystem der Anordnung eine zweite Menge von Winkelpositionen des Rotors bezogen auf den Stator des Motors zu erfassen und mehrere Winkelkorrekturwerte in Abhängigkeit des Referenzwinkels und der zweiten Menge von erfassten Winkelpositionen zu ermitteln.

Die vorgeschlagene Vorrichtung ermöglicht das Bestimmen von Winkelkorrekturwerten für eine mit der Vorrichtung verbindbare Anordnung umfassend den Motor und ein mit diesem verbautes Winkelmesssystem im eingebauten Zustand des Winkelmesssystems. Damit wird eine Minimierung der Winkelmessabweichung bzw. eine Verbesserung der Systemgenauigkeit des eingebauten Winkelmesssystems ermöglicht. Hierfür ist es lediglich erforderlich, die Antriebswelle des Motors mit einer konstanten Drehzahl anzutreiben, also eine möglichst gleichbleibende Bewegung der Antriebswelle. Die beanspruchte Vorrichtung kann außerhalb des Winkelmesssystems, also in einer separaten Einheit, beispielsweise einem Mikroprozessor mit Speicher, realisiert werden.

Der Motor kann gesteuert werden, also ohne Regelung mit Hilfe des eingebauten Winkelmesssystems. Diese Ansteuerung erfolgt beispielsweise von extern. Alternativ oder nachfolgend auf die Bestimmung der ersten Menge von erfassten Winkelpositionen wird der Motor unter Verwendung des eingebauten und zu justierenden Winkelmesssystems im geregelten Betrieb von der beanspruchten Vorrichtung angesteuert. Alternativ kann der Motor von einer Applikation, welche den Motor einsetzt oder steuert, oder von anderer Stelle aus gesteuert werden.

Im Übrigen gelten für die Vorrichtung die Ausführungen zum erfindungsgemäßen Verfahren entsprechend. Dies gilt insbesondere hinsichtlich der Vorteile und Ausführungsformen bzw. Weiterbildungen.

Insbesondere ist die erfindungsgemäße Vorrichtung zur Ausführung bzw. Durchführung des oben beschriebenen erfindungsgemäßen Verfahrens eingerichtet.

Die hierin beschriebenen Ausführungsformen können untereinander kombiniert werden, sofern sich nicht explizit etwas anderes ergibt.

Die Vorrichtung kann eine Steuereinheit und eine damit verbundene Speichereinheit aufweisen.

Weiterer Gegenstand der vorliegenden Erfindung ist ein System, welches eine Anordnung mit einem Motor und einem mit diesem verbauten Winkelmesssystem sowie die Vorrichtung wie oben beschrieben umfasst. Bei diesem System ist die Vorrichtung innerhalb des Winkelmesssystems der Anordnung implementiert.

Durch die Implementierung der vorgeschlagenen Vorrichtung zum Bestimmen von Winkelkorrekturwerten direkt in dem betroffenen und zu justierenden Winkelmesssystem ist es möglich, dass die Winkelkorrekturwerte sowohl während der Fertigung, also auch im mit dem Motor verbauten Zustand wie vorgeschlagen ermittelt werden. Somit ist ein Einsatz in Verbindung mit einem eingangs beschriebenen Kit-System möglich.

Nachfolgend wird die Erfindung rein beispielhaft unter Bezugnahme auf die Zeichnung beschrieben.

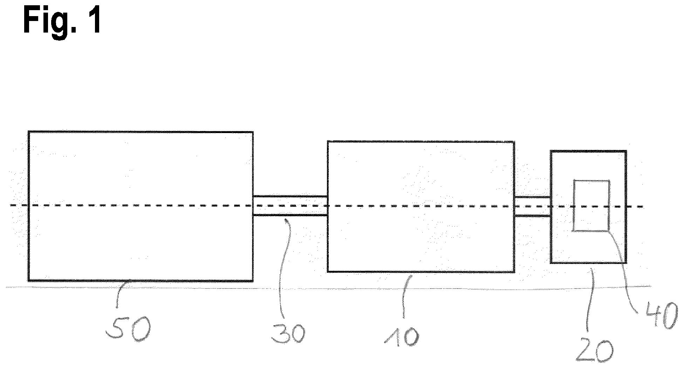

- Fig. 1: zeigt eine schematische Darstellung einer bespielhaften Ausführungsform eines Systems wie vorgeschlagen.

Figur 1 zeigt eine schematische Darstellung einer bespielhaften Ausführungsform eines Systems wie vorgeschlagen. Das System umfasst eine Anordnung 10, 20 aufweisend einen Motor 10 und ein mit diesem Motor 10 verbautes Winkelmesssystem 20. Zudem umfasst das System eine Vorrichtung 40 zum Bestimmen von Winkelkorrekturwerten für die Anordnung 10, 20. Die Vorrichtung 40 ist dabei innerhalb des Winkelmesssystems 20, beispielsweise unter Wiederverwendung der dort vorhandenen Hardware wie zum Beispiel einem Mikrocontroller mit Speichereinheit, implementiert.

Eine Antriebswelle 30 des Motors 10 wird mit einer konstanten Drehzahl angetrieben. Beispielsweise kann ein Antrieb des Motors 10 über dessen Steuerung erfolgen oder auch durch einen zusätzlichen Antrieb, beispielsweise durch die Applikation 50. Die Drehzahl unterliegt möglichst geringen Drehzahlschwankungen und liegt im Bereich zwischen beispielsweise 100 und 1500 Umdrehungen pro Minute. Das Winkelmesssystem 20 wird von der Vorrichtung 40 eingesetzt, um in konstanten Zeitabständen, also zu äquidistanten Zeitpunkten, Winkelpositionen des Rotors bezogen auf den Stator des Motors 10 zu erfassen, welche als erste Menge von Winkelpositionen bereitgestellt werden. Dies erfolgt während einer Umdrehung des Rotors. Zur Bestimmung des Referenzwinkels wird jeweils eine Differenz zwischen zwei direkt aufeinanderfolgend erfassten Winkelpositionen der ersten Menge ermittelt. Durch Mittelung der vielfach erfassten Winkelpositionen der ersten Menge wird die mittlere Differenz bestimmt. Mit Hilfe der Anzahl von während einer Umdrehung des Rotors erfassten Winkelpositionen der ersten Menge wird der Referenzwinkel bestimmt. Die Vorrichtung 40 erfasst mit Hilfe des Winkelmesssystems 20 zudem eine zweite Menge von Winkelpositionen des Rotors bezogen auf den Stator des Motors 10. Hierzu wird eine vordefinierte Anzahl von Winkelpositionen während einer Umdrehung des Rotors erfasst. Das System 40 bestimmt dann für mehrere oder alle Winkelpositionen dieser zweiten Menge aus einer Differenz zwischen der jeweiligen Winkelposition und der gemäß Referenzwinkel erwarteten Winkelposition einen zugehörigen Winkelkorrekturwert. Dieser Korrekturwert stellt die Messabweichung des Winkelmesssystems 20 dar und wird beispielsweise als ein Wert in einer Korrekturtabelle abgespeichert. Eine Korrekturtabelle hat hierfür beispielsweise zwischen 16 und 65.536 Einträge oder Stützstellen. Bevorzugt wird diese so erstellte Tabelle in dem Winkelmesssystem 20 hinterlegt.

Durch das erfindungsgemäße Bestimmen von Messabweichungen des Winkelmesssystems 20 und Bestimmen von entsprechenden Winkelkorrekturwerten wird es möglich, auch im wie in der Figur dargestellten verbauten Zustand des Winkelmesssystems 20 eine sehr hohe Systemgenauigkeit zu erreichen.

### Bezugszeichenliste

- 10: Motor
- 20: Winkelmesssystem
- 30: Antriebswelle
- 40: Vorrichtung
- 50: Applikation

## Patentansprüche

1. Verfahren zum Bestimmen von Winkelkorrekturwerten für eine Anordnung mit einem Motor (10) und einem mit diesem verbauten Winkelmesssystem (20), wobei das Verfahren die folgenden Schritte aufweist:
Antreiben einer Antriebswelle (30) des Motors (10) mit einer konstanten Drehzahl,
Erfassen einer ersten Menge von Winkelpositionen eines Rotors bezogen auf einen Stator des Motors (10) mit dem Winkelmesssystem (20),
Bestimmen eines Referenzwinkels in Abhängigkeit der konstanten Drehzahl und der ersten Menge von Winkelpositionen,
Erfassen einer zweiten Menge von Winkelpositionen des Rotors bezogen auf den Stator des Motors (10) mit dem Winkelmesssystem (20),
Ermitteln mehrerer Winkelkorrekturwerte in Abhängigkeit des Referenzwinkels und der zweiten Menge von Winkelpositionen.

2. Verfahren nach Anspruch 1,
wobei das Erfassen der ersten Menge von Winkelpositionen ein mehrfaches Erfassen der Winkelposition zu äquidistanten Zeitpunkten während einer, insbesondere nur einer, Umdrehung des Rotors bei der konstanten Drehzahl umfasst, wobei diese erfassten Winkelpositionen die erste Menge bilden,
wobei das Bestimmen des Referenzwinkels folgende Schritte umfasst:
Bestimmen einer mittleren Differenz zwischen jeweils zwei direkt aufeinanderfolgend erfassten Winkelpositionen der ersten Menge,
Bestimmen einer Anzahl von während einer Umdrehung des Rotors bei der Drehzahl erfassten Winkelpositionen der ersten Menge,
Bestimmen des Referenzwinkels aus der mittleren Differenz und der Anzahl.

3. Verfahren nach Anspruch 1 oder 2,
wobei beim Antreiben mit der konstanten Drehzahl die Drehzahl im Bereich zwischen 100 und 1500 Umdrehungen pro Minute liegt.

4. Verfahren nach einem der vorstehenden Ansprüche,
wobei das Erfassen der zweiten Menge von Winkelpositionen ein Erfassen einer vordefinierten Anzahl von Winkelpositionen während einer Umdrehung des Rotors umfasst, wobei diese erfassten Winkelpositionen die zweite Menge bilden,
wobei das Ermitteln der Winkelkorrekturwerte umfasst:
Bestimmen eines Winkelkorrekturwerts für mindestens zwei, insbesondere für alle, erfassten Winkelpositionen der zweiten Menge jeweils in Abhängigkeit einer Differenz zwischen der jeweiligen Winkelposition und der gemäß Referenzwinkel erwarteten Winkelposition.

5. Verfahren nach dem vorstehenden Anspruch,
wobei die Winkelkorrekturwerte in einer Tabelle abgespeichert werden, wobei die Tabelle eine Menge von Einträgen entsprechend der vordefinierten Anzahl von erfassten Winkelpositionen der zweiten Menge aufweist,
oder wobei die Tabelle eine Menge von Einträgen, die kleiner als die vordefinierte Anzahl von erfassten Winkelpositionen der zweiten Menge ist, aufweist.

6. Verfahren nach einem der vorstehenden Ansprüche,
wobei die Schritte des Verfahrens für mindestens zwei voneinander verschiedene Drehzahlen des Rotors durchgeführt werden, und/oder
wobei die Schritte des Verfahrens für dieselbe Drehzahl des Rotors erneut durchgeführt werden.

7. Verfahren nach dem vorstehenden Anspruch,
weiter aufweisend eine Auswertung der jeweils erhaltenen Winkelkorrekturwerte.

8. Verfahren nach einem der vorstehenden Ansprüche,
wobei die Schritte des Verfahrens in einem Normalbetrieb des Motors oder in einem Testbetrieb des Motors (10) durchgeführt werden.

9. Verfahren nach einem der vorstehenden Ansprüche,
weiter aufweisend Zusammenführen der ermittelten Winkelkorrekturwerte mit für das Winkelmesssystem vorab kalibrierten Kompensationswerten.

10. Vorrichtung (40) zum Bestimmen von Winkelkorrekturwerten für eine mit der Vorrichtung (40) koppelbare Anordnung (10, 20) mit einem Motor (10) und einem mit diesem verbauten Winkelmesssystem (20), wobei eine Antriebswelle (30) des Motors (10) mit einer konstanten Drehzahl angetrieben wird,
wobei die Vorrichtung (40) dazu eingerichtet ist:
mit dem Winkelmesssystem (20) der Anordnung (10, 20) eine erste Menge von Winkelpositionen eines Rotors bezogen auf einen Stator des Motors (10) zu erfassen,
einen Referenzwinkel in Abhängigkeit der ersten Menge erfasster Winkelpositionen und der konstanten Drehzahl zu bestimmen,
mit dem Winkelmesssystem (20) der Anordnung (10, 20) eine zweite Menge von Winkelpositionen des Rotors bezogen auf den Stator des Motors (10) zu erfassen, und
mehrere Winkelkorrekturwerte in Abhängigkeit des Referenzwinkels und der zweiten Menge von erfassten Winkelpositionen zu ermitteln.

11. System aufweisend eine Anordnung (10, 20) mit einem Motor (10) und einem mit diesem verbauten Winkelmesssystem (20) und
eine Vorrichtung (40) nach dem vorstehenden Anspruch,
wobei die Vorrichtung (40) innerhalb des Winkelmesssystems (20) implementiert ist.
